# EUROPEAN PATENT SPECIFICATION

(11) **EP 3 228 717 B1**
(45) Date of publication and mention of the grant of the patent: **10.04.2019**
(21) Application number: 15865349.3
(22) Date of filing: 16.11.2015
(51) Int. Cl.: C22B 1/14, C21B 13/00

(54) **DIRECT REDUCED IRON COMPACTING METHOD, DIRECT REDUCED IRON COMPACTING APPARATUS, AND MOLTEN IRON MANUFACTURING APPARATUS CONTAINING SAME**
VERFAHREN ZUR EISENSCHWAMMKOMPAKTIERUNG, VORRICHTUNG ZUR EISENSCHWAMMKOMPAKTIERUNG UND VORRICHTUNG ZUR HERSTELLUNG VON GESCHMOLZENEM EISEN DAMIT
PROCÉDÉ DE COMPACTAGE D'ÉPONGE DE FER, APPAREIL DE COMPACTAGE D'ÉPONGE DE FER, ET APPAREIL DE FABRICATION DE FONTE LIQUIDE CONTENANT CELUI-CI

(30) Priority: 05.12.2014 KR 20140174464
(43) Date of publication of application: 11.10.2017
(73) Proprietor: Posco, Pohang-si, Gyeongsangbuk-do 37859 (KR)
(72) Inventor: KIM, Hyun Soo, Pohang-si Gyeongsangbuk-do 37859 (KR); YOON, Shikyung, Pohang-si Gyeongsangbuk-do 37859 (KR); KIM, Sun Young, Pohang-si Gyeongsangbuk-do 37859 (KR); LEE, Dal Hoi, Pohang-si Gyeongsangbuk-do 37859 (KR)
(74) Representative: Zech, Stefan Markus
(86) International application number: PCT/KR2015/012287
(87) International publication number: WO 2016/089023

(56) References cited:
- EP-A1- 2 189 546
- JP-A- 2005 105 046
- JP-B2- 5 512 205
- KR-A- 20130 026 869
- KR-A- 20140 070 178
- KR-B1- 100 829 808
- US-A- 4 076 520
- US-A1- 2006 162 499

## Description

### [Technical Field]

The present invention relates to a method and an apparatus for agglomerating direct-reduced iron and an apparatus for manufacturing molten iron including the same. More particularly, the present invention relates to a method and an apparatus for agglomerating direct-reduced iron which are capable of efficiently removing gas existing in direct-reduced iron, and an apparatus for manufacturing molten iron including the same.

### [Background Art]

A smelting reduction process manufactures molten iron by inputting reduced iron ore into a melting and gasifying furnace. Iron ore, which is a raw material, is reduced in a reducing furnace and then inputted into the melting and gasifying furnace. The iron ore in the form of fine ore, which is reduced in the reducing furnace, may be agglomerated and then inputted into the melting and gasifying furnace.

As a method of agglomerating the reduced iron ore, the iron ore in the form of fine ore may be sintered through an oxidation reaction. This method re-oxidizes the reduced iron ore, which is not advantageous in terms of economic feasibility. Therefore, instead of this method, a method of agglomerating reduced iron ore by using physical pressure is mainly used US 4076520 A discloses a method for compacting (agglomerating) hot reduced iron while using non-oxidizing gases such as nitrogen or reducing gases.

The above information disclosed in this Background section is only for enhancement of understanding of the background of the invention and therefore it may contain information that does not form the prior art that is already known in this country to a person of ordinary skill in the art.

### [DISCLOSURE]

### [Technical Problem]

The present invention has been made in an effort to provide a method of agglomerating reduced iron which is capable of efficiently removing gas existing in reduced iron. The present invention has also been made in an effort to provide an apparatus for agglomerating reduced iron which is capable of efficiently removing gas existing in reduced iron. The present invention has also been made in an effort to provide an apparatus for manufacturing molten iron including the apparatus for agglomerating reduced iron.

### [Technical Solution]

An exemplary embodiment of the present invention provides a method of agglomerating direct reduced iron, the method including: i) filling a space in reduced iron with one or more gases selected from a group consisting of carbon monoxide and carbon dioxide; and ii) converting the carbon monoxide into carbon dioxide and carbon while agglomerating the reduced iron.

In the filling of the space with the gas, the reduced iron may include one or more oxides selected from a group consisting of CaO and MgO. In this case, the method of agglomerating reduced iron may further include removing the carbon dioxide by allowing the carbon dioxide to react with the oxide. The number of moles of CaO or MgO may be larger than the number of moles of the carbon dioxide.

The method of agglomerating reduced iron may further include adding one or more oxides selected from a group consisting of CaO and MgO to the reduced iron before agglomerating the reduced iron, and removing the carbon dioxide by allowing the carbon dioxide to react with the oxide.

The reduced iron may include CaO, and the amount of CaO may be 0.04 wt% to 0.1 wt%. The reduced iron may include MgO, and the amount of MgO may be 0.03 wt% to 0.09 wt%. A grain size of CaO or MgO may be 0.01 mm to 1 mm.

The method of agglomerating reduced iron may further include manufacturing the reduced iron by reducing one or more iron ore selected from a group consisting of limonite and hematite before the filling of the space with the gas. The method of agglomerating reduced iron may further include inputting nitrogen into the space in the reduced iron before the filling of the space with the gas. The gas may be substituted for the nitrogen in the filling of the space with the gas.

In the converting of the carbon monoxide into carbon dioxide and carbon, a temperature of the reduced iron may be 600°C to 800°C. The gas may include carbon monoxide and carbon dioxide, and the amount of carbon dioxide in the gas may be 17 vol% or more. In the converting of the carbon monoxide into carbon dioxide and carbon, the reduced iron may be agglomerated by a pair of rollers, and nip pressure of the pair of rollers may be 10 ton/cm to 15 ton/cm.

Another exemplary embodiment of the present invention provides an apparatus for agglomerating reduced iron, the apparatus including: i) a first hopper which is applied to store reduced iron; ii) a gas supply pipe which is connected to the first hopper and applied to fill the first hopper with one or more gases selected from a group consisting of carbon monoxide and carbon dioxide; iii) a second hopper which is connected to the first hopper and applied to be supplied with the reduced iron; iv) an additive supply pipe which is connected to the second hopper and applied to provide the second hopper with CaO or MgO; and v) a compressing device which is supplied with the reduced iron from the second hopper and applied to provide agglomerate.

The compressing device may be a pair of rollers.

Still another exemplary embodiment of the present invention provides an apparatus for manufacturing molten iron, the apparatus including: i) the apparatus for agglomerating reduced iron; ii) a reducing furnace which is applied to manufacture the reduced iron and connected to the first hopper and applied to provide the reduced iron to the first hopper; and iii) a melting and gasifying furnace which is connected to the apparatus for agglomerating reduced iron and manufactures molten iron by inputting coal together with the agglomerate.

### [Advantageous Effects]

It is possible to efficiently agglomerate reduced iron while minimizing the occurrence of gas. Therefore, it is possible to increase production of agglomerates while greatly increasing density of the agglomerate. As a result, it is possible to greatly improve process efficiency while simplifying the process.

### [Description of the Drawings]

FIG. 1 is a schematic flowchart of a method of agglomerating reduced iron according to an exemplary embodiment of the present invention.
FIG. 2 is a graph illustrating a change in gas pressure in reduced iron in accordance with a rotational speed of a roller included in an apparatus for manufacturing agglomerate.
FIG. 3 is a phase diagram of CO, CO₂, Fe, FeO, and Fe₃O₄.
FIG. 4 is a schematic view of the apparatus for manufacturing agglomerate according to the exemplary embodiment of the present invention.
FIG. 5 is a schematic view of an apparatus for manufacturing molten iron according to the exemplary embodiment of the present invention.

### [Mode for Invention]

The terms first, second, third, and the like are used to describe various portions, components, regions, layers, and/or sections, but the present invention is not limited thereto. These terms are used only to distinguish any portion, component, region, layer, or section from other portions, components, regions, layers, or sections. Therefore, a first portion, component, region, layer, or section to be described below may be referred to as a second portion, component, region, layer, or section without departing from the scope of the present invention.

The technical terms used herein are merely for the purpose of describing a specific exemplary embodiment, and not intended to limit the present invention. Singular expressions used herein include plural expressions unless they have definitely opposite meanings. The terms "comprises" and/or "comprising" used in the specification specify particular features, regions, integers, steps, operations, elements, and/or components, but do not preclude the presence or addition of other particular features, regions, integers, steps, operations, elements, and/or components.

Unless otherwise defined, all terms used herein including technical or scientific terms have the same meanings as meanings which are generally understood by those skilled in the art. Terms, which are usually used and defined in dictionaries, shall be construed that they have meanings matching those in the context of a related art, and shall not be construed in ideal or excessively formal meanings unless they are clearly defined in the present application.

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

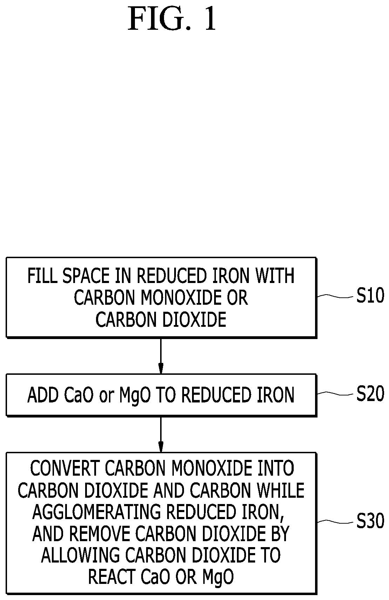

FIG. 1 is a schematic flowchart of a method of agglomerating reduced iron according to an exemplary embodiment of the present invention. The flowchart of the method of agglomerating reduced iron as illustrated in FIG. 1 is merely for exemplifying the present invention, and the present invention is not limited thereto. Therefore, the method of agglomerating reduced iron may be variously changed.

As illustrated in FIG. 1, the method of agglomerating reduced iron includes i) filling a space in reduced iron with carbon monoxide or carbon dioxide (S10), ii) adding CaO or MgO to the reduced iron (S20), and iii) converting the carbon monoxide into carbon dioxide and carbon while agglomerating the reduced iron, and removing the carbon dioxide by allowing the carbon dioxide to react with CaO or MgO (S30). In addition, the method of agglomerating reduced iron may further include other steps.

First, in step S10, the space in the reduced iron is filled with carbon monoxide or carbon dioxide. That is, the space in the reduced iron, which is converted as iron ore is brought into contact with reducing gas in a reducing furnace, is filled with carbon monoxide or carbon dioxide. In addition to the space in the reduced iron, an air gap in the reduced iron may also be filled with carbon monoxide or carbon dioxide.

Because the reduced iron has high reactivity, the reduced iron may be easily oxidized or ignited when the reduced iron is exposed to air. For example, in a case in which hematite is used as the iron ore, the hematite is transformed into magnetite by being reduced, and as a result, a crystal structure of the hematite is greatly changed. Because the hematite and the magnetite are different from each other in terms of the crystal structure, the volume of the hematite is increased by the transformation, and as a result, many cracks are formed in the hematite. Because of the cracks, a specific surface area of the hematite is increased and an area of the hematite, which may react with gas, is increased, thereby increasing a reduction rate of the reduced iron.

In addition, in a case in which limonite is used as the iron ore, a temperature of the limonite is raised to 500°C or higher as the limonite is heated in the reducing furnace, and the limonite is transformed into hematite as crystal water existing in the limonite leaks to the outside. When the crystal water leaks, an occupancy space of the crystal water is exposed to the outside, and as a result, porosity and a specific surface area are increased.

For this reason, in a case in which reduced iron is manufactured by reducing an iron ore such as limonite or hematite, reactivity is increased due to a large specific surface area of the reduced iron, and as a result, the reduced iron is likely to be ignited or re-oxidized by reacting with oxygen at room temperature. This situation occurs even when a pellet or agglomerated ore is reduced. Therefore, in the related art, spaces in the direct-reduced iron, the reduced pellet, and the reduced agglomerated ore are filled with inert nitrogen by purging the nitrogen, so that the reduced iron does not react with outside air. However, in a case in which the agglomerate is manufactured by pressing reduced iron, nitrogen does not react with the reduced iron even in the pressed state, and as a result, it is necessary to remove nitrogen in order to increase density of the agglomerate. Here, instead of simply removing nitrogen, it is advantageous to substitute carbon monoxide or a gas mixture of carbon monoxide and carbon dioxide for nitrogen, as described in the exemplary embodiment of the present invention, in order to obtain an effect of reducing the volume of gas by changing a phase of gas in the pressed state.

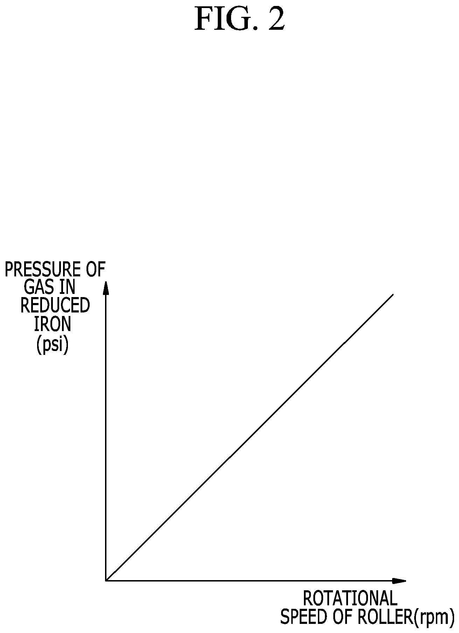

FIG. 2 illustrates a change in gas pressure in reduced iron in accordance with a rotational speed of a roller included in an apparatus for manufacturing agglomerate. That is, FIG. 2 illustrates the amount of change in pressure of gas in reduced iron in a case in which the agglomerate is manufactured by inputting the reduced iron between a pair of rollers.

As illustrated in FIG. 2, it can be seen that the pressure of gas in the reduced iron is linearly increased as the rotational speed of the rollers is increased. That is, the rotational speed of the rollers needs to be increased to manufacture a large amount of agglomerates. However, the pressure of gas in the reduced iron is increased, thereby making it impossible to implement desired production. Therefore, it is necessary to remove gas in the reduced iron in order to increase production of the agglomerate.

In step S10, the space in the reduced iron may be filled with carbon monoxide or a gas mixture of carbon monoxide and carbon dioxide by inputting the carbon monoxide or the gas mixture of carbon monoxide and carbon dioxide. The carbon monoxide in the reduced iron is precipitated as carbon and then removed when the reduced iron is pressed, which may assist in increasing density of the agglomerate by decreasing the pressure of gas in the reduced iron, and the principle will be described below.

Carbon monoxide causes a carbon deposition reaction at a temperature of 1000°C or lower. The reaction accelerates when there is metal iron. In addition, the carbon deposition reaction accelerates as gas pressure is increased, and the reaction may be expressed by the following Chemical Formula 1.

[Chemical Formula 1] 2CO → C + CO₂

When pressure is increased, the reaction according to Chemical Formula 1 is carried out to decrease pressure based on Le Chatelier's principle, thereby accelerating a forward reaction. When the carbon deposition reaction occurs, 2 moles of carbon monoxide are converted into 1 mole of carbon dioxide, such that gas may be removed due to the decrease in volume of gas. As a result, the pressure of gas in the reduced iron is decreased, which assists in increasing density of the agglomerate.

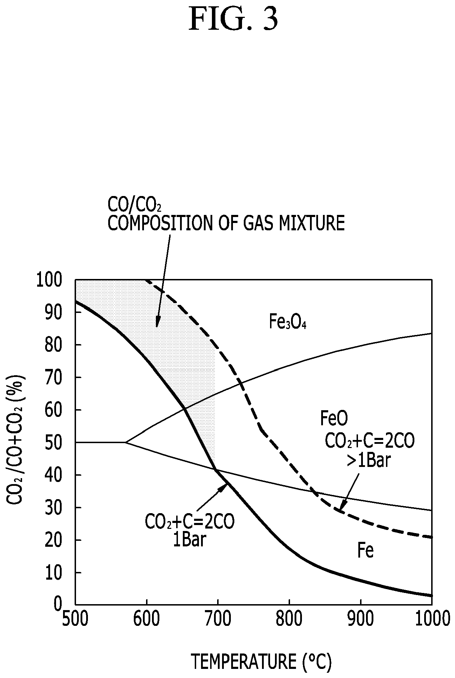

When carbon monoxide is converted into carbon dioxide and carbon in Chemical Formula 1, the temperature of the reduced iron may be 600°C to 800°C. When the temperature of the reduced iron is too low or high, an effect of decreasing volume in accordance with a decrease in number of moles of gas cannot be expected. Therefore, if necessary, the temperature of the reduced iron needs to be adjusted to the aforementioned range by means of a temperature control means. Meanwhile, a mixture of carbon monoxide and carbon dioxide may be used instead of carbon monoxide, which will be described in more detail with reference to FIG. 3.

FIG. 3 is a schematic phase diagram of CO, CO₂ and Fe, and FeO and Fe₃O₄. Here, the dotted line indicates an equilibrium curve along which carbon deposition occurs at pressure exceeding 1 bar, and a gray part is a region in which carbon monoxide and carbon dioxide are mixed.

In a case in which the gas mixture of carbon dioxide and carbon monoxide is present on the right of a curve of CO₂ + C = 2CO in FIG. 3, the space in the reduced iron is well filled with the gas mixture, and then the gas mixture is converted into carbon in an agglomerate manufacturing process, such that volume of the gas mixture may be decreased. Therefore, since the agglomerate having high density may be manufactured, the gas mixture with this composition may be used.

More specifically, as illustrated in FIG. 3, a temperature of the reduced iron to be agglomerated may be 600°C to 800°C, such that the amount of carbon dioxide in the reduced iron may be about 17 vol% or more. In this case, the carbon monoxide may be well converted into carbon, such that carbon dioxide, among gases to be inputted to the reduced iron, may be inputted so as to satisfy the aforementioned range. More particularly, when the temperature of the reduced iron is about 700°C, the amount of carbon dioxide may be about 40 vol% to 80 vol%. In this case, carbon monoxide is well converted into carbon when the reduced iron is agglomerated.

Referring back to FIG. 1, CaO or MgO is added to the reduced iron in step S20. CaO or MgO reacts with carbon dioxide so as to remove carbon dioxide, thereby greatly decreasing volume of gas existing in the space in the reduced iron. With a carbon precipitation reaction, either gas, which is converted into carbon dioxide, or carbon dioxide, which is inputted as the gas mixture, may be removed by reacting with CaO or MgO. Therefore, in a case in which the reduced iron is agglomerated by inputting carbon dioxide and substituting carbon dioxide for nitrogen existing in the space in the reduced iron, carbon dioxide is removed by reacting with CaO or MgO. Therefore, the space occupied by the carbon dioxide is eliminated, thereby increasing density of the agglomerate.

Meanwhile, during the process of reducing the iron ore, flux may not be used to manufacture an iron source used for an electric furnace. Therefore, in this case, CaO or MgO, which is oxide, is added to the reduced iron. The number of moles of CaO to be added or the number of moles of MgO to be added may be larger than the number of moles of carbon dioxide. The reason is to sufficiently remove carbon dioxide and decrease volume of gas. That is, the amount of flux to be added is adjusted to be larger than the stoichiometric amount of flux that may react with carbon dioxide.

More particularly, in a case in which CaO is added to the reduced iron, the amount of CaO may be 0.04 wt% to 0.1 wt%. If a too large amount of CaO is added to the reduced iron, a reduction rate of the reduced iron may be adversely affected. In addition, if a too small amount of CaO is added to the reduced iron, CaO is not sufficient to be used in the electric furnace. Therefore, the weight percent of CaO with respect to the reduced iron may be adjusted to the aforementioned range.

In addition, in a case in which MgO is added to the reduced iron, the amount of MgO may be 0.03 wt% to 0.09 wt%. If a too large amount of MgO is added to the reduced iron, a reduction rate of the reduced iron may be adversely affected. In addition, if a too small amount of MgO is added to the reduced iron, MgO is not sufficient to be used in the electric furnace. Therefore, the weight percent of MgO with respect to the reduced iron may be adjusted to the aforementioned range.

Meanwhile, for example, in a case in which bulk density of the reduced iron is 2 and true density of the reduced iron is 4, carbon dioxide of 0.25 m³ exists in air gaps in 1 ton of reduced iron, and the number of moles of the carbon dioxide is 11.2 mol, and converted mass of carbon dioxide is 491 g. The amount of CaO and the amount of MgO, which correspond to the carbon oxide, are 629 g and 448 g, respectively. The amount of CaO and the amount of MgO with respect to the 1 ton of reduced iron are 0.063 wt% and 0.045 wt%, respectively, which are a small amount that does not affect the process at all. It is possible to remove carbon dioxide existing in the space or air gap in the reduced iron by using a small amount of CaO and MgO. In particular, it is possible to decrease pressure of carbon dioxide in a predetermined volume by nearly half only by removing 50% of overall carbon dioxide.

Meanwhile, step S20 may be omitted in a case in which CaO or MgO, which is oxide, is already included in the reduced iron. For example, step S20 may not be performed in a case in which CaO or MgO, as flux, is included in the reduced iron.

[Chemical Formula 2] CaO (MgO) + CO₂ → CaCO₃ (MgCO₃)

That is, as can be seen from Chemical Formula 2, CaO or MgO reacts with carbon dioxide and produces a compound of CaCO₃ or MgCO₃. Depending on the reduction process, the reduced iron contains CaCO₃ or MgCO₃ as flux. For example, in a smelting reduction process, flux, which is suitable for a target composition of final slag, is used. An example of a raw material used as flux may include limestone or dolomite. The flux is reduced and fired together with the iron ore in the reducing furnace, and then exists in the form of CaO or MgO. The fired CaO and MgO may react with carbon dioxide, and in a case in which reaction pressure is increased, a reaction rate is increased, such that pressure is decreased in a predetermined volume as the number of moles of carbon dioxide is decreased. Because the reaction according to Chemical Formula 2 is promoted due to the increased pressure, it is possible to efficiently remove carbon dioxide when the agglomerate is manufactured by using the pair of rollers.

Meanwhile, a grain size of CaO or MgO to be added to the reduced iron may be 0.01 mm to 1 mm. If a grain size of CaO or a grain size of MgO is too small, manufacturing costs may be increased. In addition, if a grain size of CaO or a grain size of MgO is too large, efficiency of the reaction with carbon dioxide may deteriorate. Therefore, the grain size of CaO or the grain size of MgO may be adjusted to the aforementioned range.

Finally, in step S30, carbon monoxide is converted into carbon dioxide and carbon while agglomerating the reduced iron. Carbon dioxide is removed by reacting with CaO or MgO. When the reduced iron is pressed, carbon monoxide in the space in the reduced iron is converted into carbon and deposited in the reduced iron. As a result, the volume of carbon monoxide is decreased, such that density of the agglomerate may be increased. In addition, CaO or MgO, which is inputted to the reduced iron or already exists in the reduced iron, reacts with carbon dioxide and is isolated in the form of CaCO₃ or MgCO₃, and as a result, it is possible to remove the produced carbon dioxide. That is, in a case in which reduced iron in the form of powder is compression-molded by using the pair of rollers, the number of moles of gas is decreased, and as a result, productivity may be improved by overcoming a limitation of the method of manufacturing agglomerate, even though reduced iron in the form of ultrafine powder is used. In this case, the reduced iron may be agglomerated by adjusting nip pressure of the pair of rollers to 10 ton/cm to 15 ton/cm. If the reduced iron is agglomerated at too low pressure or too high pressure, it is difficult for carbon dioxide to be converted into carbon. Therefore, a range of pressure applied to the reduced iron is adjusted to the aforementioned range.

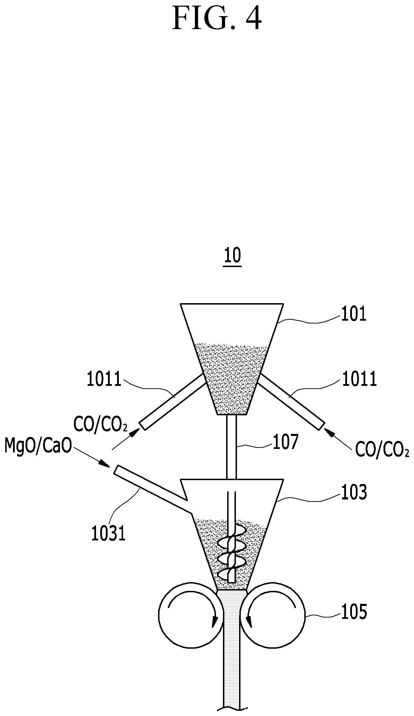

FIG. 4 schematically illustrates an apparatus 10 for manufacturing agglomerate according to the exemplary embodiment of the present invention. A structure of the apparatus 10 for manufacturing agglomerate in FIG. 4 is merely for exemplifying the present invention, and the present invention is not limited thereto. The apparatus 10 for manufacturing agglomerate in FIG. 4 may be modified to other forms. In addition, the apparatus 10 for manufacturing agglomerate in FIG. 4 may be used in all fields in which compression of iron is required in addition to compression of the reduced iron.

As illustrated in FIG. 4, the apparatus 10 for manufacturing agglomerate includes a first hopper 101, a second hopper 103, and a pair of rollers 105. In addition, the apparatus 10 for manufacturing agglomerate includes a gas supply pipe 1011 and an additive supply pipe 1031, and may further include other components as necessary.

First, the reduced iron is stored in the first hopper 101. That is, the reduced iron, which is reduced in the reducing furnace, is conveyed and temporarily stored in the first hopper 101. The reduced iron stored in the first hopper 101 may be temporarily filled with nitrogen so as to be prevented from being re-oxidized.

The gas supply pipe 1011 is installed at a lateral side of the first hopper 101. The gas supply pipe 1011 is connected to the first hopper 101 and fills the first hopper 101 with carbon monoxide or carbon dioxide. Therefore, carbon monoxide or carbon dioxide is substituted for nitrogen with which the space in the reduced iron is filled. The gas supply pipe 1011 is installed to be inclined upward toward the first hopper 101. As a result, even though the reduced iron is scattered by pressure of carbon monoxide or carbon dioxide supplied through the gas supply pipe 1011, the reduced iron may be deposited by gravity, such that a stable stored state may be maintained.

Meanwhile, the first hopper 101 is connected to the second hopper 103 through a reduced iron conveying pipe 107. Although not illustrated in FIG. 4, a feed weigher may be installed to convey a required amount of reduced iron from the first hopper 101 to the second hopper 103. The second hopper 103 is connected to the additive supply pipe 1031. The additive supply pipe 1031 provides CaO or MgO, and is installed to be inclined downward toward the second hopper 103. Therefore, the additive supply pipe 1031 may stably input CaO or MgO into the second hopper 103 by gravity, and to efficiently convert carbon dioxide, which exists in the space in the reduced iron, into carbon.

As indicated by arrows in FIG. 4, the pair of rollers 105 is rotated in the opposite direction and compresses the reduced iron. FIG. 4 illustrates the pair of rollers 105 as a compressing device, but this configuration merely for exemplifying the present invention, and the present invention is not limited thereto. Therefore, in addition to the pair of rollers 105, other press devices capable of pressing the reduced iron may be used as a compressing device.

Meanwhile, because it is necessary to decrease a specific surface area in order to decrease reactivity of the reduced iron, the reduced iron is compressed by using the pair of rollers 105. In this case, production of the reduced iron may be adjusted in accordance with a rotational speed of the pair of rollers 105. From the point of view of a material, it is possible to manufacture the agglomerate with high density from the reduced iron with low density by using the pair of rollers 105, and from the point of view of gas, it is possible to effectively remove gas existing in the space in the reduced iron by using the pair of rollers 105. If gas cannot be effectively removed, gas is pressurized and pressure is increased when the reduced iron is pressed between the pair of rollers 105, and the pressurized gas is expanded when the reduced iron passes through the pair of rollers 105, which may cause damage (spring-back) to the agglomerate.

When the rotational speed of the pair of rollers 105 is increased, pressure of gas existing in the reduced iron is increased, and the increase in pressure of gas hinders the supply of the reduced iron between the pair of rollers 105. The gas, which is produced when the reduced iron is compressed, is discharged through an upper side of the pair of rollers 105, and in this case, the reduced iron is discharged together with the gas, and the discharged iron hinders the supply of another reduced iron between the pair of rollers 105. The same occurs even when a screw is installed in the second hopper 103 so as to forcibly input the reduced iron between the pair of rollers 105. As a result, it is necessary to cut off the supply of the reduced iron, and only the gas remains between the pair of rollers 105, such that the reduced iron cannot be compression-molded. A vibrator or a vacuum method is adopted to remove gas, but the vibrator or the vacuum method is just a temporary counteracting means, and thus there is a need for a basic solution like the exemplary embodiment of the present invention. That is, according to the exemplary embodiment of the present invention, it is possible to basically decrease the amount of gas in the reduced iron, and as a result, it is possible to manufacture a large amount of agglomerate with high density.

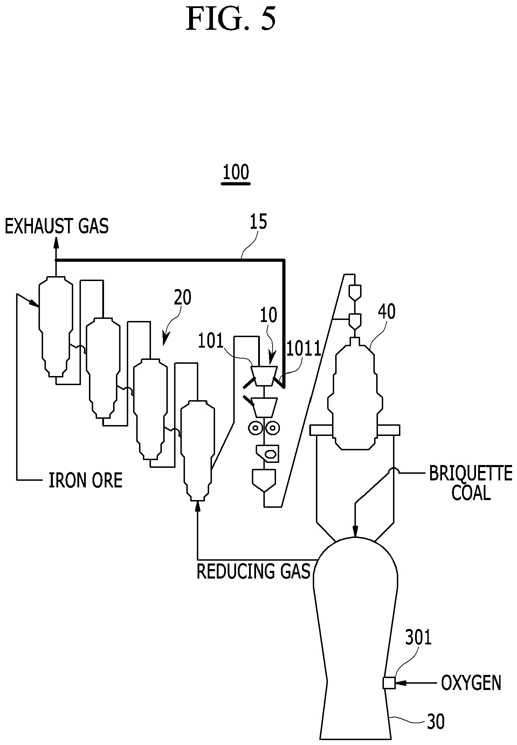

FIG. 5 schematically illustrates an apparatus 100 for manufacturing molten iron according to the exemplary embodiment of the present invention. A structure of the apparatus 100 for manufacturing molten iron in FIG. 5 is merely for exemplifying the present invention, and the present invention is not limited thereto. Therefore, the apparatus 100 for manufacturing molten iron in FIG. 5 may be modified to various forms. Meanwhile, because the apparatus 100 for manufacturing molten iron in FIG. 5 includes the apparatus 10 for manufacturing agglomerate in FIG. 4, like reference numerals indicate like elements, and a detailed description thereof will be omitted.

As illustrated in FIG. 5, the apparatus 100 for manufacturing molten iron includes the apparatus 10 for manufacturing agglomerate, a reducing furnace 20, a melting and gasifying furnace 30, and an agglomerate storage tank 40. Here, a compression-reduced iron storage tank 50 may be omitted, and the reducing furnace 20 is a multi-stage fluidized bed type reducing furnace. Although not illustrated in FIG. 5, a packed bed type reducing furnace may also be used as a reducing furnace.

Manufactured briquette coal is inputted into the melting and gasifying furnace 30. Here, the briquette coal generates reducing gas in the melting and gasifying furnace 30, and the generated reducing gas is supplied to the reducing furnace 20. Iron ore is supplied to the reducing furnace 20 having fluidized beds, and flows by reducing gas supplied to the reducing furnace 20 from the melting and gasifying furnace 30, such the reduced iron is manufactured. The reduced iron is compressed by the apparatus 10 for manufacturing agglomerate and then stored in the agglomerate storage tank 40. The agglomerate is supplied from the agglomerate storage tank 40 to the melting and gasifying furnace 30, and melted by heat of combustion of the briquette coal by using oxygen supplied through a tuyere 301. The briquette coal is supplied to the melting and gasifying furnace 30 and converted into char having air permeability, and as a result, a large amount of gas generated at a lower side of the melting and gasifying furnace 30 and the compressed reduced iron more easily and uniformly pass through a coal filling layer in the melting and gasifying furnace 30, such that molten iron with high quality may be manufactured.

Meanwhile, as illustrated in FIG. 5, the reducing furnace 20 is connected to the first hopper 101, and provides the reduced iron to the first hopper 101. Further, the gas supply pipe 1011 is connected to a reducing gas branch pipe 15, and may be supplied with reducing gas which is exhaust gas discharged from the reducing furnace 20. Carbon monoxide, which is reducing gas, is provided through the reducing gas branch pipe 15 connected to the reducing furnace 20, and the carbon monoxide is supplied to the gas supply pipe 1011. Therefore, the first hopper 101 may be supplied with carbon monoxide with high quality. Meanwhile, although not illustrated in FIG. 5, a reformer may be installed in the reducing gas branch pipe 15 so as to extract only carbon monoxide from the reducing gas and provide the extracted carbon monoxide to the gas supply pipe 1011.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### <Description of symbols>

10. Apparatus for manufacturing agglomerate
15. Reducing gas branch pipe
20. Reducing furnace
30. Melting and gasifying furnace
40. Agglomerate storage tank
100. Apparatus of manufacturing molten iron
101, 103. Hopper
105. Pair of rollers
107. Reduced iron conveying pipe
301. Tuyere
1011. Gas supply pipe
1031. Additive supply pipe

## Claims

1. A method of agglomerating reduced iron, the method comprising:
filling a space in reduced iron with one or more gases selected from a group consisting of carbon monoxide and carbon dioxide; and
converting the carbon monoxide into carbon dioxide and carbon while agglomerating the reduced iron.

2. The method of claim 1, wherein:
in the filling of the space with the gas, the reduced iron includes one or more oxides selected from a group consisting of CaO and MgO, and
the method further includes removing the carbon dioxide by allowing the carbon dioxide to react with the oxide.

3. The method of claim 2, wherein:
the number of moles of CaO or MgO is larger than the number of moles of the carbon dioxide.

4. The method of claim 1, further comprising:
adding one or more oxides selected from a group consisting of CaO and MgO to the reduced iron before agglomerating the reduced iron, and removing the carbon dioxide by allowing the carbon dioxide to react with the oxide.

5. The method of claim 2 or claim 4, wherein:
the reduced iron includes the CaO, and the amount of CaO is 0.04 wt% to 0.1 wt%.

6. The method of claim 2 or claim 4, wherein:
the reduced iron includes the MgO, and the amount of MgO is 0.03 wt% to 0.09 wt%.

7. The method of claim 4, wherein:
a grain size of CaO or MgO is 0.01 mm to 1 mm.

8. The method of claim 1, further comprising:
manufacturing the reduced iron by reducing one or more iron ore selected from a group consisting of limonite and hematite before the filling of the space with the gas.

9. The method of claim 8, further comprising:
inputting nitrogen into the space in the reduced iron before the filling of the space with the gas,
wherein the gas is substituted for the nitrogen in the filling of the space with the gas.

10. The method of claim 1, wherein:
in the converting of the carbon monoxide into carbon dioxide and carbon, a temperature of the reduced iron is 600°C to 800°C.

11. The method of claim 10, wherein:
the gas includes carbon monoxide and carbon dioxide, and the amount of carbon dioxide in the gas is 17 vol% or more.

12. The method of claim 1, wherein:
in the converting of the carbon monoxide into carbon dioxide and carbon, the reduced iron is agglomerated by a pair of rollers, and nip pressure of the pair of rollers is 10 ton/cm to 15 ton/cm.

13. An apparatus for agglomerating reduced iron, the apparatus comprising:
a first hopper which is applied to store reduced iron;
a gas supply pipe which is connected to the first hopper and applied to fill the first hopper with one or more gases selected from a group consisting of carbon monoxide and carbon dioxide;
a second hopper which is connected to the first hopper and applied to be supplied with the reduced iron;
an additive supply pipe which is connected to the second hopper and applied to provide the second hopper with CaO or MgO; and
a compressing device which is supplied with the reduced iron from the second hopper and applied to provide agglomerate.

14. The apparatus of claim 13, wherein:
the compressing device is a pair of rollers.

15. An apparatus for manufacturing molten iron, the apparatus comprising:
the apparatus for agglomerating reduced iron according to claim 13;
a reducing furnace which is applied to manufacture the reduced iron and connected to the first hopper and applied to provide the reduced iron to the first hopper; and
a melting and gasifying furnace which is connected to the apparatus for agglomerating reduced iron and manufactures molten iron by inputting coal together with the agglomerate.

## Patentansprüche

1. Verfahren zum Agglomerieren reduzierten Eisens, wobei das Verfahren umfasst:
Füllen eines Raums im reduzierten Eisen mit einem oder mehreren Gas/en, das bzw. die aus einer Gruppe ausgewählt ist bzw. sind, die aus Kohlenmonoxid und Kohlendioxid besteht; und
Umwandeln des Kohlenmonoxids in Kohlendioxid und Kohlenstoff, während das reduzierte Eisen agglomeriert wird.

2. Verfahren nach Anspruch 1, wobei:
beim Füllen des Raums mit dem Gas das reduzierte Eisen ein oder mehrere Oxid/e enthält, das bzw. die aus einer Gruppe ausgewählt ist bzw. sind, die aus CaO und MgO besteht, und
das Verfahren darüber hinaus beinhaltet, das Kohlendioxid zu entfernen, indem zugelassen wird, dass das Kohlendioxid mit dem Oxid reagiert.

3. Verfahren nach Anspruch 2, wobei:
die Molanzahl von CaO oder MgO größer ist als die Molanzahl des Kohlendioxids.

4. Verfahren nach Anspruch 1, darüber hinaus umfassend:
Zusetzen von einem oder mehreren Oxid/en, das bzw. die aus einer Gruppe ausgewählt ist bzw. sind, die aus CaO und MgO besteht, zu dem reduzierten Eisen, bevor das reduzierte Eisen agglomeriert wird, und Entfernen des Kohlendioxids, indem zugelassen wird, dass das Kohlendioxid mit dem Oxid reagiert.

5. Verfahren nach Anspruch 2 oder Anspruch 4, wobei:
das reduzierte Eisen das CaO enthält, und die Menge an CaO 0,04 Gew.-% bis 0,1 Gew.-% beträgt.

6. Verfahren nach Anspruch 2 oder Anspruch 4, wobei:
das reduzierte Eisen das MgO enthält, und die Menge an MgO 0,03 Gew.-% bis 0,09 Gew.-% beträgt.

7. Verfahren nach Anspruch 4, wobei:
es sich bei der Korngröße von CaO oder MgO um 0,01 mm bis 1 mm handelt.

8. Verfahren nach Anspruch 1, darüber hinaus umfassend:
Herstellen des reduzierten Eisens, indem ein oder mehrere Eisenerz/e, das bzw. die aus einer Gruppe ausgewählt ist bzw. sind, die aus Limonit und Hämatit besteht, bevor der Raum mit dem Gas gefüllt wird, reduziert wird bzw. werden.

9. Verfahren nach Anspruch 8, darüber hinaus umfassend:
Einbringen von Stickstoff in den Raum im reduzierten Eisen, bevor der Raum mit dem Gas gefüllt wird,
wobei das Gas den Stickstoff beim Füllen des Raums mit dem Gas ersetzt.

10. Verfahren nach Anspruch 1, wobei
beim Umwandeln des Kohlenmonoxids in Kohlendioxid und Kohlenstoff eine Temperatur des reduzierten Eisens 600°C bis 800°C beträgt.

11. Verfahren nach Anspruch 10, wobei:
das Gas Kohlenmonoxid und Kohlendioxid enthält, und die Menge an Kohlendioxid im Gas 17 Vol-% oder mehr beträgt.

12. Verfahren nach Anspruch 1, wobei:
beim Umwandeln des Kohlenmonoxids in Kohlendioxid und Kohlenstoff das reduzierte Eisen durch ein Paar Walzen agglomeriert wird und ein Walzspaltdruck des Paars Walzen 10 Tonnen/cm bis 15 Tonnen/cm beträgt.

13. Vorrichten zum Agglomerieren reduzierten Eisens, wobei die Vorrichtung umfasst:
einen ersten Trichter, der angebracht ist, um reduziertes Eisen zu lagern;
ein Gaszufuhrrohr, das an den ersten Trichter angeschlossen und angebracht ist, um den ersten Trichter mit einem oder mehreren Gas/en zu füllen, das bzw. die aus einer Gruppe ausgewählt ist bzw. sind, die aus Kohlenmonoxid und Kohlendioxid besteht;
einen zweiten Trichter, der an den ersten Trichter angeschlossen und angebracht ist, um mit dem reduzierten Eisen versorgt zu werden;
ein Additivzufuhrrohr, das an den zweiten Trichter angeschlossen und angebracht ist, um den zweiten Trichter mit CaO oder MgO zu beliefern; und
eine Komprimiervorrichtung, die mit dem reduzierten Eisen aus dem zweiten Trichter versorgt wird und angebracht ist, um Agglomerat bereitzustellen.

14. Vorrichtung nach Anspruch 13, wobei:
es sich bei der Komprimiervorrichtung um ein Paar Walzen handelt.

15. Vorrichtung zum Herstellen schmelzflüssigen Eisens, wobei die Vorrichtung umfasst:
die Vorrichtung zum Agglomerieren reduzierten Eisens nach Anspruch 13;
einen Reduzierofen, der angebracht ist, um das reduzierte Eisen herzustellen, und der an den ersten Trichter angeschlossen und angebracht ist, um das reduzierte Eisen dem ersten Trichter bereitzustellen; und
einen Schmelz- und Vergasungsofen, der an die Vorrichtung zum Agglomerieren reduzierten Eisen angeschlossen ist und schmelzflüssiges Eisen durch Einbringen von Kohle zusammen mit dem Agglomerat herstellt.

## Revendications

1. Procédé d'agglomération de fer réduit, le procédé comprenant :
le remplissage d'un espace dans du fer réduit avec un ou plusieurs gaz sélectionnés dans un groupe constitué par du monoxyde de carbone et du dioxyde de carbone ; et
la conversion du monoxyde de carbone en dioxyde de carbone et en carbone tout en agglomérant le fer réduit.

2. Le procédé de la revendication 1, sachant que :
lors du remplissage de l'espace avec le gaz, le fer réduit inclut un ou plusieurs oxydes sélectionnés dans un groupe constitué par CaO et MgO, et
le procédé inclut en outre l'enlèvement du dioxyde de carbone en permettant au dioxyde de carbone de réagir avec l'oxyde.

3. Le procédé de la revendication 2, sachant que :
le nombre de moles de CaO ou MgO est plus grand que le nombre de moles du dioxyde de carbone.

4. Le procédé de la revendication 1, comprenant en outre :
l'ajout d'un ou de plusieurs oxydes sélectionnés dans un groupe constitué par CaO et MgO au fer réduit avant d'agglomérer le fer réduit, et l'enlèvement du dioxyde de carbone en permettant au dioxyde de carbone de réagir avec l'oxyde.

5. Le procédé de la revendication 2 ou de la revendication 4, sachant que :
le fer réduit inclut le CaO, et la quantité de CaO est de 0,04 % en poids à 0,1 % en poids.

6. Le procédé de la revendication 2 ou de la revendication 4, sachant que :
le fer réduit inclut le MgO, et la quantité de MgO est de 0,03 % en poids à 0,09 % en poids.

7. Le procédé de la revendication 4, sachant que :
une dimension de grain de CaO ou de MgO est de 0,01 mm à 1 mm.

8. Le procédé de la revendication 1, comprenant en outre :
la fabrication du fer réduit en réduisant un ou plusieurs minerais de fer sélectionnés dans un groupe constitué par la limonite et l'hématite avant le remplissage de l'espace avec le gaz.

9. Le procédé de la revendication 8, comprenant en outre :
l'introduction d'azote dans l'espace dans le fer réduit avant le remplissage de l'espace avec le gaz,
sachant que le gaz est substitué à l'azote lors du remplissage de l'espace avec le gaz.

10. Le procédé de la revendication 1, sachant que :
lors de la conversion du monoxyde de carbone en dioxyde de carbone et en carbone, une température du fer réduit est de 600 °C à 800 °C.

11. Le procédé de la revendication 10, sachant que :
le gaz inclut du monoxyde de carbone et du dioxyde de carbone, et la quantité de dioxyde de carbone dans le gaz est de 17 % en volume ou plus.

12. Le procédé de la revendication 1, sachant que :
lors de la conversion du monoxyde de carbone en dioxyde de carbone et en carbone, le fer réduit est aggloméré par une paire de rouleaux, et la pression d'emprise de la paire de rouleaux est de 10 tonnes/cm à 15 tonnes/cm.

13. Appareil d'agglomération de fer réduit, l'appareil comprenant :
une première trémie qui est mise en oeuvre pour stocker du fer réduit ;
une conduite d'alimentation en gaz qui est connectée à la première trémie et mise en oeuvre pour remplir la première trémie avec un ou plusieurs gaz sélectionnés dans un groupe constitué par le monoxyde de carbone et le dioxyde de carbone ;
une deuxième trémie qui est connectée à la première trémie et mise en oeuvre pour être alimentée en le fer réduit ;
une conduite d'alimentation supplémentaire qui est connectée à la deuxième trémie et mise en oeuvre pour alimenter la deuxième trémie en CaO ou MgO ; et
un dispositif de compression qui est alimenté en le fer réduit depuis la deuxième trémie et mis en oeuvre pour fournir de l'agglomérat.

14. L'appareil de la revendication 13, sachant que :
le dispositif de compression est une paire de rouleaux.

15. Appareil de fabrication de fer fondu, l'appareil comprenant :
l'appareil d'agglomération de fer réduit selon la revendication 13 ;
un four de réduction qui est mis en oeuvre pour fabriquer le fer réduit et connecté à la première trémie et mis en oeuvre pour fournir le fer réduit à la première trémie ; et
un four de fusion et de gazéification qui est connecté à l'appareil d'agglomération de fer réduit et fabrique du fer fondu en introduisant du charbon conjointement avec l'agglomérat.
